# EUROPEAN PATENT APPLICATION

(11) **EP 1 555 656 A1**
(43) Date of publication of application: **20.07.2005**
(21) Application number: 05000742.6
(22) Date of filing: 14.01.2005
(51) Int. Cl.: G11B 5/70

(54) **Magnetic recording medium and method for manufacturing the magnetic recording medium**

(30) Priority: 15.01.2004 JP 2004007571
(71) Applicant: Fuji Photo Film Co., Ltd., Kanagawa (JP)
(72) Inventor: Tomaru, Mikio, Odawara-shi Kanagawa (JP); Mandai, Toshihiro, Odawara-shi Kanagawa (JP)
(74) Representative: Grünecker, Kinkeldey, Stockmair & Schwanhäusser Anwaltssozietät

(57) **Abstract**

In the magnetic recording medium and the method for manufacturing the magnetic recording medium according to the present invention, the surface roughness Ra of the first coating layer formed on a surface of the substrate is smaller than the surface roughness Ra of the substrate. This provides a magnetic recording medium having a high performance using an inexpensive substrate. In addition, the second coating layer comprising a magnetic material has a thickness of 150 nm or less, so that the surface topography of the first coating layer, which is a smooth layer, can be reflected on the surface of the second coating layer comprising a magnetic material to provide a magnetic recording medium having a superior C/N ratio.

## Description

### BACKGROUND OF THE INVENTION

### Field of the Invention

The present invention relates to a magnetic recording medium and a method for manufacturing the magnetic recording medium and more particularly to a magnetic recording medium manufactured by applying a magnetic recording layer on a substrate continuously running and being supported by a running guide device such as a guide roller and to a method for manufacturing the magnetic recording medium.

### Description of the Related Art

Recently, recording devices having a larger capacity and smaller size have been increasingly needed, as computers become smaller and have increased information processing capability. With this, improvement in the recording capacity of recording mediums has been increasingly needed. In such magnetic recording mediums, particularly magnetic tapes, a higher running property and durability than those of conventional ones are needed to maintain stable recording and reproduction.

In coating type magnetic recording mediums, it is important to improve the smoothness of the medium surface and make the magnetic layer thinner in order to improve recording density. In view of such problems, various propositions have been made by this applicant and so on (see Japanese Examined Patent Application Publication No. 5-57647, Japanese Patent Application Laid-open No. 2003-132522, and Japanese Patent No. 2938549), and predetermined effects have been obtained.

Among these, Japanese Examined Patent Application Publication No. 5-57647 and Japanese Patent Application Laid-open No. 2003-132522 describe structures, in which a smooth layer is formed on a surface of a substrate. Japanese Patent No. 2938549 relates to polyester films that provide improved adhesiveness without causing problems such as blocking.

### SUMMARY OF THE INVENTION

However, in the conventional technologies as described above, problems are not solved completely. When the surface of the substrate is smoothened as described in Japanese Patent No. 2938549, handling is difficult in subsequent steps. That is, when the smoothness of the surface of the substrate is improved, meandering and wrinkling easily occur during drawing and during winding after manufacturing films, so that the yield decreases. As a result, the manufacturing cost increases.

In structures, in which a smoothened layer is formed on a base material (substrate) and then coating layers are formed on the smoothened layer in the order of a non-magnetic layer and a magnetic layer, as described in Japanese Examined Patent Application Publication No. 5-57647 and Japanese Patent Application Laid-open No. 2003-132522, the effect of smoothening is not sufficiently obtained. That is, when the coating layers are thick, the surface of the magnetic layer is roughened since particles in the magnetic layer become liable to aggregate or behave similarly.

In addition, when the difference in thickness between the layers formed on both surfaces of the base material (substrate) is large, the shape of the substrate (tape) deteriorates, for example, curling (curl-like deformation) increases due to unbalance in internal stress in the coating, thus, adversely affecting the running property of the substrate (tape).

The present invention is made in view of such circumstances, and it is an object of the present invention to provide a magnetic recording medium that can achieve high density recording and has an improved C/N ratio and a method for manufacturing the magnetic recording medium.

In order to achieve the above object, the present invention provides a magnetic recording medium comprising: a substrate; a first coating layer formed on a surface of the substrate; and a second coating layer comprising a magnetic material formed on the first coating layer, wherein the surface roughness Ra of the first coating layer is smaller than the surface roughness Ra of the substrate, and the second coating layer has a thickness of 150 nm or less, and a method for manufacturing the magnetic recording medium.

According to the present invention, the surface roughness Ra of the first coating layer formed on a surface of the substrate is smaller than the surface roughness Ra of the substrate. This provides a magnetic recording medium having a high performance using an inexpensive substrate. In addition, the second coating layer comprising a magnetic material has a thickness of 150 nm or less, so that the surface topography of the first coating layer, which is a smooth layer, can be reflected on the surface of the second coating layer comprising a magnetic material to provide a magnetic recording medium having a superior C/N ratio.

Surface roughness Ra conforms to arithmetic average roughness Ra defined in JIS (Japanese Industrial Standards) B0601.

In the present invention, it is preferable that the magnetic recording medium further comprises a back layer formed on the back surface of the substrate, and that the difference between the total thickness of the first coating layer and the second coating layer and the thickness of the back layer is 0.3 µm or less. Such a structure, in which the magnetic layer (second coating layer) and the like are formed on a surface of the substrate and the back layer is formed on the back surface of the substrate, and in which the difference in thickness between the layers on the front and back surfaces is slight, reduces curling (curl-like deformation), which can provide a magnetic recording medium having a superior running property.

In the present invention, it is preferable that the second coating layer has a surface roughness Ra of 4 nm or less, and that the density of projections having a height of 20 nm or more on a surface of the second coating layer, as measured by an atomic force microscope, is 40/900 µm² or less. Such a magnetic layer (second coating layer) surface can provide a magnetic recording medium having a superior C/N ratio and running property.

In the present invention, it is preferable that the viscosity of the first coating solution forming the first coating layer as measured by a Brookfield type viscometer is 100 Pa·s or less. The first coating solution having such a viscosity improves the leveling property during coating, which can provide a magnetic recording medium having a superior C/N ratio and running property.

In the present invention, it is preferable that the first coating solution forming the first coating layer contains a radiation curable resin, and that the first coating solution is exposed to radiation to be cured, before the second coating solution forming the second coating layer is applied. The first coating solution containing such a radiation curable resin can easily reduce the viscosity of the first coating solution to provide a magnetic recording medium having a superior C/N ratio and running property.

As described above, according to the present invention, the surface roughness Ra of the first coating layer formed on a surface of the substrate is smaller than the surface roughness Ra of the substrate. This provides a magnetic recording medium having a high performance using an inexpensive substrate. In addition, the second coating layer comprising a magnetic material has a thickness of 150 nm or less, so that the surface topography of the first coating layer, which is a smooth layer, can be reflected on the surface of the second coating layer comprising a magnetic material to provide a magnetic recording medium having a superior C/N ratio.

### BRIEF DESCRIPTION OF THE DRAWINGS

Fig. 1 is a table showing smooth layer processes;
Fig. 2 is a table showing the results of Example 1; and
Fig. 3 is a table showing the results of Example 2.

### DETAILED DESCRIPTION OF THE PREFERRED EMBODIMENTS

The magnetic recording medium and method for manufacturing the magnetic recording medium according to the present invention are described below in detail. In the magnetic recording medium of the present invention, a smooth layer, which is a first coating layer, is formed on a surface of a substrate, and a magnetic layer comprising a magnetic material, which is a second coating layer, is formed on the first coating layer (smooth layer). The surface roughness Ra of the first coating layer (smooth layer) is smaller than the surface roughness Ra of the substrate, and the second coating layer (magnetic layer) has a thickness of 150 nm or less.

The substrate used in the present invention should not be particularly limited, however, substantially non-magnetic and flexible substrates are preferable. As the flexible substrate used in the present invention, known films, such as polyesters, including polyethylene terephthalate and polyethylene naphthalate, polyolefins, cellulose triacetate, polycarbonate, polyimide, polyamideimide, polysulfone, aromatic polyamide and aliphatic polyamide, and polybenzoxazole, can be used. Among these, high strength substrates such as polyethylene naphthalate and polyamide are preferably used.

A laminate type of substrate as shown in Japanese Patent Application Laid-open No. 3-224127 can also be used to change the surface roughness of the magnetic surface and the base surface as required. These substrates may be previously subjected to corona discharge treatment, plasma treatment, easy adhesion treatment, heat treatment, dust removal treatment, and the like. It is also possible to apply an aluminum or glass substrate as the substrate of the present invention.

In order to achieve the object of the present invention, it is preferable that the substrate has an arithmetic average roughness Ra of about 8.0 nm or less as measured by TOPO-3D manufactured by WYKO. In the present invention, arithmetic average roughness Ra can be set low due to the first and second coating layers, substrates having a relatively large Ra can be addressed well, which is advantageous in cost. It is preferable that these substrates do not have large projections of 0.5 µm or more. The surface roughness shape is freely controlled by the size and amount of a filler added to the substrate as required. Examples of these fillers include oxides and carbonates of Ca, Si, Ti, and the like, as well as organic powders including an acrylic type.

The substrate preferably has a maximum height Rmax of 1 µm or less, a ten point average roughness Rz of 0.5 µm or less, a center plane peak height Rp of 0.5 µm or less, a center plane valley depth Rv of 0.5 µm or less, a center plane area ratio Sr of 10% to 90%, an average wavelength λa of 5 µm to 300 µm. In order to obtain the desired electromagnetic conversion property and durability, the surface projection distribution of these substrates can be optionally controlled by the filler, and projections having a size of 0.01 to 1 µm can be controlled in the range of 0 to 2000 per 0.1 mm².

The substrate used in the present invention preferably has a F-5 value of 5 to 50 kg/mm² (≅ 49 to 490 MPa). The substrate preferably has a thermal shrinkage rate of 3% or less, more preferably 1.5% or less, after 30 minutes at 100°C and preferably has a thermal shrinkage rate of 1 % or less, more preferably 0.5% or less, after 30 minutes at 80°C. The substrate preferably has a break strength of 5 to 100 kg/mm² (≅ 49 to 980 MPa) and an elastic modulus of 100 to 2000 kg/mm² (≅ 0.98 to 19.6 GPa). The substrate has a temperature expansion coefficient of 10⁻⁴ to 10⁻⁸/°C and preferably 10⁻⁵ to 10⁻⁶/°C. The substrate has a humidity expansion coefficient of 10⁻⁴/RH% or less and preferably 10⁻⁵/RH% or less. It is preferable that each of these thermal property, dimensional property, and mechanical strength property is substantially equal with a difference of 10% or less in the in-plane directions of the substrate.

Next, the first coating solution forming the first coating layer (smooth layer) is described. As the method for forming the first coating layer (smooth layer), the following method 1) or 2) can be preferably employed, however, methods other than these methods can also be employed. 1) A coating solution containing a compound having a radiation curing functional group in the molecule is applied on a surface of a substrate and then exposed to radiation to be cured to form a smooth layer. 2) A polymer solution is applied on a surface of a substrate and dried to form a smooth layer.

First, method 1) is described. A compound having a radiation curing functional group in the molecule (hereinafter also referred to as "radiation curable compound") means a compound having the property that, when given energy by radiation, for example, electron beam, ultraviolet radiation, or the like, is polymerized or crosslinked to become a polymer and be cured. The reaction in the radiation curable compound does not proceed unless such energy is given. Therefore, the coating solution comprising a radiation curable compound has a stable viscosity unless it is exposed to radiation, so that a high coating smoothness can be obtained.

In addition, the reaction proceeds instantly by high energy by radiation, so that a high coating strength can be obtained. The radiation curable compound preferably has a molecular weight of 200 to 2000. When the radiation curable compound has a molecular weight in this range, because of its relatively low molecular weight, the coating is easily flowed and highly moldable in the calendering step, so that a smooth coating can be formed.

Examples of radiation curable compounds having two functionalities or more can include acrylates, acrylamides, methacrylates, methacrylamides, allyl compounds, vinyl ethers, vinyl esters, and the like.

Specific examples of difunctional radiation curable compounds can include compounds, in which acrylic acid or methacryl acid is added to aliphatic diol, represented by ethylene glycol diacrylate, propylene glycol diacrylate, butanediol diacrylate, hexanediol diacrylate, diethylene glycol diacrylate, triethylene glycol diacrylate, tetraethylene glycol diacrylate, neopentyl glycol diacrylate, tripropylene glycol diacrylate, ethylene glycol dimethacrylate, propylene glycol dimethacrylate, butanediol dimethacrylate, hexanediol dimethacrylate, diethylene glycol dimethacrylate, triethylene glycol dimethacrylate, tetraethylene glycol dimethacrylate, neopentyl glycol dimethacrylate, tripropylene glycol dimethacrylate, and the like.

Polyether acrylates and polyether methacrylates, in which acrylic acid or methacryl acid is chemically bound to a polyether polyol, such as polyethylene glycol, polypropylene glycol, or polytetramethylene glycol, as well as polyester acrylates and polyester methacrylates, in which acrylic acid or methacryl acid is chemically bound to a polyester polyol obtained from a known dibasic acid and a glycol, can also be used.

Polyurethane acrylates and polyurethane methacrylates, in which acrylic acid or methacryl acid is chemically bound to a polyurethane produced by reacting a known polyol or diol and a polyisocyanate may be used. Compounds, in which acrylic acid or methacryl acid is added to bisphenol A, bisphenol F, hydrogenated bisphenol A, and hydrogenated bisphenol F, and alkylene oxide adducts thereof, as well as compounds having a cyclic structure, such as isocyanuric acid alkylene oxide modified diacrylate, isocyanuric acid alkylene oxide modified dimethacrylate, tricyclodecane dimethanol diacrylate, and tricyclodecane dimethanol dimethacrylate, can also be used.

Specific examples of trifunctional radiation curable compounds can include trimethylolpropane triacrylate, trimethylolethane triacrylate, trimethylolpropane alkylene oxide modified triacrylate, pentaerythritol triacrylate, dipentaerythritol triacrylate, isocyanuric acid alkylene oxide modified triacrylate, propionic acid dipentaerythritol triacrylate, hydroxypivalaldehyde modified dimethylolpropane triacrylate, trimethylolpropane trimethacrylate, trimethylolpropane alkylene oxide modified trimethacrylate, pentaerythritol trimethacrylate, dipentaerythritol trimethacrylate, isocyanuric acid alkylene oxide modified trimethacrylate, propionic acid dipentaerythritol trimethacrylate, hydroxypivalaldehyde modified dimethylolpropane trimethacrylate, and the like.

Specific examples of radiation curable compounds having four functionalities or more can includes pentaerythritol tetraacrylate, ditrimethylolpropane tetraacrylate, dipentaerythritol pentaacrylate, propionic acid dipentaerythritol tetraacrylate, dipentaerythritol hexaacrylate, phosphazene alkylene oxide modified hexaacrylate, and the like.

Among these, difunctional acrylate compounds having a molecular weight of 200 to 2000 are preferable, and compounds, in which acrylic acid or methacryl acid is added to bisphenol A, bisphenol F, hydrogenated bisphenol A, and hydrogenated bisphenol F, and alkylene oxide adducts thereof, are more preferable.

The radiation curable compound used in the present invention may be combined with a polymer type binder. Examples of the binder combined include polymers in method 2) as described below as well as conventionally known thermoplastic resins, thermosetting resins, reactive resins, and mixture thereof. It is preferable to combine a polymerization initiator when ultraviolet radiation is used as radiation. Examples of the polymerization initiator can include radical photopolymerization initiators, cationic photopolymerization initiators, photoamine generators, and the like.

Examples of radical photopolymerization initiators include, for example, α-diketones, such as benzyl and diacetyl; acyloins, such as benzoin; acyloin ethers, such as benzoin methyl ether, benzoin ethyl ether, and benzoin isopropyl ether; thioxantones, such as thioxantone, 2,4-diethyl thioxantone, and thioxantone-4-sulfonic acid; benzophenones, such as benzophenone, 4,4'-bis(dimethylamino)benzophenone, and 4,4'-bis(diethylamino)benzophenone; Michler's ketones; acetophenones, such as acetophenone, 2-(4-toluenesulfonyloxy)-2-phenylacetophenone, p-dimethylamino acetophenone, α,α'-dimethoxy acetoxy benzophenone, 2,2'-dimethoxy-2-phenylacetophenone, p-methoxyacetophenone, 2-methyl [4-(methylthio)phenyl]-2-morpholino-1-propanone, and 2-benzyl-2-dimethylamino-1-(4-morpholinophenyl)-butane-1-one; quinones, such as anthraquinone and 1,4-naphthoquinone; halides, such as phenacyl chloride, trihalomethylphenyl sulfone, and tris(trihalomethyl)-s-triazine; acylphosphine oxides; and peroxides, such as di-t-butyl peroxide.

As the radical photopolymerization initiator, commercial products, for example, IRGACURE-184, 261, 369, 500, 651, and 907 (manufactured by CIBA-GEIGY), Darocur-1173, 1116, 2959, 1664, and 4043 (manufactured by Merck Ltd., Japan), KAYACURE-DETX, -MBP, -DMBI, -EPA, and -OA (manufactured by Nippon Kayaku Co., Ltd.), VICURE-10 and 55 (manufactured by STAUFFER Co., Ltd.), TRIGONAL P1 (manufactured by AKZO Co., Ltd.), SANDORAY 1000 (manufactured by SANDOZ Co., Ltd.), DEAP (manufactured by APJOHN Co., Ltd.), and QUANTACURE-PDO, -ITX, and -EPD (manufactured by WARD BLEKINSOP Co., Ltd.), can also be used.

Examples of cationic photopolymerization initiators include diazonium salts, triphenylsulfonium salts, metallocene compounds, diaryliodonium salts, nitrobenzylsulfonates, α-sulfonyloxy ketones, diphenyl disulfones, and imidyl sulfonates. As the cationic photopolymerization initiator, commercial products, such as ADEKA Ultraset PP-33, OPTMERSP-150 and 170 (manufactured by ASAHI DENKA Co., Ltd.) (diazonium salt), OPTOMERSP-150 and 170 (manufactured by ASAHI DENKA Co., Ltd.) (sulfonium salt), and IRGACURE 261 (manufactured by CIBA-GEIGY) (metallocene compound), can also be used.

Examples of photoamine generators include nitrobenzyl carbamates and iminosulfonates. These photopolymerization initiators are properly selected according to exposure conditions (for example, whether under oxygen atmosphere or under non-oxygen atmosphere) and the like. Also, two or more of these photopolymerization initiators can be combined.

A composition comprising the radiation curable compound and optionally a binder and/or a photopolymerization initiator is dissolved in a solvent to make a coating solution. The solvent is properly selected from those described below. After this coating solution is applied on a substrate, usually, the coating layer is exposed to radiation after being dried. Drying may be either natural drying or heating drying.

When electron beam is used as radiation, the total amount of electron beam is preferably 1 to 20 Mrad, more preferably 3 to 10 Mrad. When ultraviolet radiation is used as radiation, its amount is preferably 10 to 100 mJ/cm². As ultraviolet radiation (UV) and electron beam (EB) irradiation apparatuses, irradiation conditions, and the like, those known as described in "UV and EB Curing Technology"(published by Sogo Gijutsu Center Co., Ltd.), "Applied Technology of Low Energy Electron Beam Irradiation" (2000, published by CMC Publishing Co., Ltd.), and the like can be used.

The thickness of the smooth layer depends on components of the smooth layer and the like and is preferably in the above range. For magnetic tapes, thinner thickness is preferable for high capacity as long as the surface property and physical strength of the smooth layer are ensured.

Next, method 2) for forming the first coating layer (smooth layer) is described. The polymer solution used preferably has a viscosity of 50 cp or less, more preferably 30 cp or less. The coating solution preferably has a surface tension of 22 mN/m or more, more preferably 24 mN/m or less. The polymer preferably has a number average molecular weight of 10000 to 100000. When the coating layer is provided on the smooth layer to form a magnetic recording medium, polymers that are insoluble or poorly soluble in a solvent for the coating layer are preferable, and water-soluble polymers are particularly preferable. The polymer preferably has a glass transition temperature (Tg) of 0 to 120°C, more preferably 10 to 80°C. If the glass transition temperature is less than 0°C, blocking may occur at the end faces. If the glass transition temperature is more than 120°C, the internal stress in the smooth layer is not relieved, and as a result, adhesion sometimes cannot be ensured.

The polymer used is not particularly limited, however, those satisfying the above conditions are preferable. Examples of the polymer include polyamide, polyamideimide, polyester, polyurethane, acrylic resin, and the like. Examples of polyamide include polycondensation compounds of diamine and dicarboxylic acid, ring-opening polymerization compounds of lactams, copolymers of salts of 1/1 (molar ratio) diamine and dicarboxylic acid and lactams such as caprolactam, and the like.

Examples of diamine can include hydrazine, methylenediamine, ethylenediamine, trimethylenediamine, tetramethylenediamine, pentamethylenediamine, hexamethylenediamine, heptamethylenediamine, octamethylenediamine, nonamethylenediamine, decamethylenediamine, diaminocyclohexane, di(aminomethyl)cyclohexane, bis-(4-aminocyclohexyl)methane, bis-(4-amino-3,5-methylcyclohexyl)methane, o-phenylenediamine, m-phenylenediamine, p-phenylenediamine, 4,4'-diaminobiphenyl, tolylenediamine, xylenediamine, naphthylenediamine, bis(aminomethyl)piperazine, bis(aminoethyl)piperazine, bis(aminopropyl)piperazine, 1-(2-aminomethyl)piperazine, 1-(2-aminoethyl)piperazine, 1-(2-aminopropyl)piperazine, and the like.

Examples of dicarboxylic acid can include oxalic acid, malonic acid, succinic acid, glutaric acid, adipic acid, pimelic acid, azelaic acid, sebacic acid, cyclohexanedicarboxylic acid, orthophthalic acid, isophthalic acid, terephthalic acid, naphthalenedicarboxylic acid, and the like, and acid anhydrides thereof. Examples of lactams include α-pyrrolidone, α-piperidone, γ-butyrolactam, δ-valerolactam, ε-caprolactam, ω-capryllactam, ω-laurolactam, and the like.

Also, examples of polyamide include amino acid polymers. The amino acid polymers may be synthetic polymers or natural polymers, for example, protein such as collagen. Further, polyamide can also be properly selected from those described in Plastic Material Course (16) "Polyamide Resin" (edited by Osamu Fukumoto and published by THE NIKKAN KOGYO SHIMBUN, LTD); "Synthetic Polymer V" (published by Asakura Shoten and edited by Murahashi, Imoto, and Tani); U.S. Patent Nos. 2130497, 2130523, 2149273, 2158064, 2223403, 2249627, 2534347, 2540352, 2715620, 2756221, 2939862, 2994693,3012994, 3133956, 3188228, 3193475, 3193483,3197443,3226362, 3242134, 3247167, 3299009, 3328352, 3354123, etc.; and polyamide having a tertiary amino group described in Japanese Patent Application Laid-open No. 11-283241; etc.

Polyamideimide is obtained by reacting a low molecular weight polyamide having an amino group at its end and acid dianhydride or its ester, by reacting a low molecular weight polyamide acid having an amino group at its end and dibasic acid chloride, by reacting trimellitic acid derivative and diamine, or the like.

Examples of the polyamide component include those formed from diamine and dicarboxylic acid or amino acid as described for the above polyamides. Examples of diamine used in the reaction with trimellitic acid derivative or the like include the above diamines. Examples of acid dianhydride or its ester include pyromellitic acid-1,4-dimethyl ester, pyromellitic acid tetramethyl ester, pyromellitic acid ethyl ester, 2,3,6,7-naphthalenetetracarboxylic acid dianhydride, 3,3',4,4'-biphenyltetracarboxylic acid dianhydride, 1,2,5,6-naphthalenetetracarboxylic acid dianhydride, 2,2',3,3'-biphenyltetracarboxylic acid dianhydride, 2,2',6,6'-biphenyltetracarboxylic acid dianhydride, and the like.

A low molecular weight polyamide acid having an amino group at its end can be formed by reacting the above diamine and acid dianhydride or its ester. Examples of dibasic acid chloride include chlorides of the above dicarboxylic acids. The polyamideimide used can be properly selected from those described in "Polyamide Resin Handbook" (published by THE NIKKAN KOGYO SHIMBUN, LTD.) and the like.

Examples of polyester include those synthesized from dicarboxylic acid and glycol. Examples of dicarboxylic acid include aromatic, aliphatic, and alicyclic dicarboxylic acids, and the like, and specifically those similar to the above dicarboxylic acids. Aromatic dicarboxylic acids are preferable.

Examples of the glycol component include aliphatic, alicyclic, and aromatic glycols, and the like, such as ethylene glycol, diethylene glycol, triethylene glycol, tetraethylene glycol, propylene glycol, butanediol, neopentyl glycol, hexanediol, cyclohexanediol, cyclohexanedimethanol, and bisphenol A.

Examples of polyurethane include those manufactured by known methods from polyol, diisocyanate, a chain extending agent, and the like. Examples of polyol include polyester polyol, polyether polyol, polycarbonate polyol, and the like. Examples of the polyester component of polyester polyol include diols of the above polyesters. Examples of diisocyanate include those described for the binder used in the magnetic layer. Examples of the chain extending agent include polyalcohols, polyamines (for example, the above diamines), and the like.

As the polymer used for forming the smooth layer as described above, it is preferable to use polymers, in which at least one polar group selected from -COOM, -SO₃M, -OSO₃M, -P=O(OM)₂, -O-P=O(OM)₂, OH, NR₂, N+R₃, an epoxy group, SH, CN, and the like, as required, wherein M indicates a hydrogen atom, alkali metal, or ammonium, and wherein R indicates a hydrocarbon group, is introduced by copolymerization or addition reaction. It is preferable that the amount of such a polar group is properly selected in the range of 0.1 to 3 meq/g.

In the above method 1) or 2), as the solvent for the coating solution for the smooth layer, ketones, such as acetone, methyl ethyl ketone, methyl isobutyl ketone, diisobutyl ketone, cyclohexanone, isophorone, and tetrahydrofuran; alcohols, such as methanol, ethanol, propanol, butanol, isobutyl alcohol, isopropyl alcohol, and methylcyclohexanol; esters, such as methyl acetate, butyl acetate, isobutyl acetate, isopropyl acetate, ethyl lactate, and glycol acetate; glycol ethers, such as glycol dimethyl ether, glycol monoethyl ether, and dioxane; aromatic hydrocarbons, such as benzene, toluene, xylene, cresol, and chlorobenzene; chlorinated hydrocarbons, such as methylene chloride, ethylene chloride, carbon tetrachloride, chloroform, ethylene chlorohydrin, and dichlorobenzene; N,N-dimethylformamide; hexane and the like; and water and the like can be used.

These solvents need not be 100% pure and may comprise, other than the main component, impurities, such as isomer, unreacted substances, by-products, decomposed substances, oxide, and water. These impurities are preferably 30% or less, more preferably 10% or less. Among these solvents, single use or combination of alcohols, such as methanol, ethanol, and isopropyl alcohol, water, cyclohexanone, methyl ethyl ketone, butyl acetate, and the like is preferable.

It is also possible that the coating solution for the smooth layer contains a filler to obtain the desired surface property. The filler preferably has a maximum diameter of 50 nm or less. If the maximum diameter is more than 50 nm, dropping out (DO) may be caused. However, the composition of such a coating solution for the smooth layer may be changed, and a coating solution to form a smooth layer out of the range of the present invention may be applied on the other side of the substrate to form a back layer and the like to form a tape-like magnetic recording medium. In such a case, a layer of another composition may be further formed on the smooth layer.

It is desired that the smooth layer is stable to the coating solution for the magnetic layer. Therefore, the weight loss of the smooth layer when extracted with a mixed solution of methyl ethyl ketone (MEK)/cyclohexanone (1:1) is preferably 0.0 to 0.4 mg/cm², more preferably 0.0 to 0.2 mg/cm².

The magnetic layer, which is the second coating layer provided in the present invention, is suitable for a coating type mainly comprising a ferromagnetic powder and a binder, but it may be a ferromagnetic metal thin film type. For the latter, the magnetic layer can be provided by a known method, such as vapor deposition or sputtering. For the coating type, the magnetic layer preferably has a thickness of 0.02 to 0.5 µm, more preferably 0.05 to 0.2 µm.

When the magnetic layer is provided on the smooth layer, which is the first coating layer, the substrate supporting the smooth layer is preferably provided with the magnetic layer and the like while being not wound after the smooth layer is formed, however, a wound substrate may be used.

For the case where the present invention is a coating type magnetic recording medium, each of its components is described below. First, the magnetic layer, which is the second coating layer, is described.

A first coating layer (smooth layer) is formed on a surface of a substrate. After this smooth layer is dried or UV cured, a magnetic layer comprising a magnetic material, which is a second coating layer, is formed on the smooth layer. The magnetic layer preferably has a coercivity Hc of 160 kA/m or more, and for ferromagnetic metal powders, Bm is preferably 0.2 to 0.5 T, and for hexagonal ferrite powders, Bm is preferably 0.1 to 0.3 T.

The ferromagnetic powder used in the magnetic layer of the present invention should not be particularly limited, however, ferromagnetic metal powders, comprising α-Fe as the main component, and hexagonal ferrite powders are preferable. These ferromagnetic metal powders preferably may comprise, other than the predetermined atom, atoms, such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, and B. Particularly, the ferromagnetic metal powders preferably comprise, other than α-Fe, at least one of Al, Si, Ca, Y, Ba, La, Nd, Co, Ni, and B, more preferably at least one of Co, Y, and Al.

The Co content is preferably 0 atom % to 40 atom % with respect to Fe, more preferably 15 atom % to 35 atom %, and most preferably 20 atom % to 35 atom %. The Y content is preferably 1.5 atom % to 12 atom %, more preferably 3 atom % to 10 atom %, and most preferably 4 atom % to 9 atom %. The Al content is preferably 1.5 atom % to 12 atom %, more preferably 3 atom % to 10 atom %, and most preferably 4 atom % to 9 atom %.

These ferromagnetic powders may be treated previously with a dispersant, lubricant, surfactant, antistatic agent, and the like as described below before dispersion. Specifically, such a treatment is described in Japanese Examined Patent Application Publication No. 44-14090, Japanese Examined Patent Application Publication No. 45-18372, Japanese Examined Patent Application Publication No. 47-22062, Japanese Examined Patent Application Publication No. 47-22513, Japanese Examined Patent Application Publication No. 46-28466, Japanese Examined Patent Application Publication No. 46-38755, Japanese Examined Patent Application Publication No. 47-4286, Japanese Examined Patent Application Publication No. 47-12422, Japanese Examined Patent Application Publication No. 47-17284, Japanese Examined Patent Application Publication No. 47-18509, Japanese Examined Patent Application Publication No. 47-18573, Japanese Examined Patent Application Publication No. 39-10307, Japanese Examined Patent Application Publication No. 46-39639, U.S. Patent Nos. 3026215, 3031341, 3100194, 3242005, and 3389014, etc.

The ferromagnetic powder may comprise a small amount of hydroxide, or oxide. The ferromagnetic metal powder can be obtained by known manufacturing methods, including the following methods: a method of reducing with complex organic acid salts (mainly oxalate) and a reducing gas such as hydrogen, a method of reducing iron oxide with a reducing gas such as hydrogen to obtain Fe or Fe-Co particles or the like, a method of thermally decomposing a metal carbonyl compound, a method of adding a reducing agent, such as sodium borohydride, hypophosphite, or hydrazine, to an aqueous solution of ferromagnetic metal for reduction, a method of evaporating metal in an inert gas at a low pressure to obtain fine powder, and the like.

The ferromagnetic metal powder thus obtained can be subjected to any of known gradual oxidation treatments, that is, a method of immersing the ferromagnetic metal powder in an organic solvent and then drying it, a method of immersing the ferromagnetic metal powder in an organic solvent, then feeding it with an oxygen-containing gas to form an oxide film on its surface, and drying it, and a method of forming an oxide film on the surface by adjusting the partial pressure of an oxygen gas and an inert gas without using any organic solvent.

The ferromagnetic metal powder of the magnetic layer of the present invention preferably has a specific surface area (SBET), as measured by the BET method, of 45 to 80 m²/g, more preferably 50 to 70 m²/g. If the specific surface area is less than 45 m²/g, noise becomes high. If the specific surface area is more than 80 m²/g, it is difficult to obtain the surface property, which is not preferable. The ferromagnetic metal powder of the magnetic layer of the present invention preferably has a crystallite size of 80 to 180 A, more preferably 100 to 180 A, and most preferably 110 to 175 A. The ferromagnetic metal powder preferably has a long axis length of 0.01 µm to 0.15 µm, more preferably 0.03 µm to 0.15 µm, and most preferably 0.03 µm to 0.12 µm. The ferromagnetic metal powder preferably has a needle ratio of 3 to 15, more preferably 5 to 12. The ferromagnetic metal powder preferably has a saturation magnetization σs of 100 to 180 A·m²/kg, more preferably 110 to 170 A·m²/kg, and most preferably 125 to 160 A·m²/kg. The ferromagnetic metal powder preferably has a coercivity of 160 to 280 kA/m, more preferably 176 to 240 kA/m.

It is preferable that the ferromagnetic metal powder has a moisture content of 0.01 to 2%. It is preferable to optimize the moisture content of the ferromagnetic metal powder according to the type of binder. It is preferable to optimize the pH of the ferromagnetic metal powder by combination with the binder used. Its range is 4 to 12, preferably 6 to 10. The ferromagnetic metal powder may be subjected to surface treatment with Al, Si, P, or oxide thereof, or the like, as required. Its amount is 0.1 to 10% with respect to the ferromagnetic metal powder. If the ferromagnetic metal powder is subjected to surface treatment, the adsorption of lubricant such as fatty acid is 100 mg/m² or less, which is preferable. The ferromagnetic metal powder can comprise inorganic ions, such as soluble Na, Ca, Fe, Ni, and Sr. It is preferable that the ferromagnetic metal powder essentially has no these inorganic ions, however, these inorganic ions hardly affect the properties in the range of 200 PPM or less.

In addition, it is preferable that the ferromagnetic metal powder used in the present invention has fewer voids. Its value is 20 volume % or less, more preferably 5 volume % or less. The shape of the ferromagnetic metal powder may be any of needle-shape, rice-grain-shape, and spindle-shape, as long as the property for particle size as previously noted is satisfied. It is preferable that the SFD of the ferromagnetic metal powder itself is low, preferably 0.8 or less. The Hc distribution of the ferromagnetic metal powder should be reduced. If the SFD is 0.8 or less, the electromagnetic conversion property is good, the output is high, and the magnetization inversion is sharp with reduced peak shift, which are suitable for high density digital magnetic recording. In order to reduce the Hc distribution, a method of improving a goethite particle size distribution, a method of preventing sintering, and the like can be used for the ferromagnetic metal powder.

Next, hexagonal ferrite powders are described. Examples of the hexagonal ferrite used in the present invention include substitution products of barium ferrite, strontium ferrite, lead ferrite, and calcium ferrite, Co substitution products, and the like.

Specifically, examples of the hexagonal ferrite used in the present invention include magnetoplumbite-type barium ferrite and strontium ferrite, magnetoplumbite-type ferrite whose particle surface is covered with spinel, magnetoplumbite-type barium ferrite and strontium ferrite partly containing a spinel phase, and the like. The hexagonal ferrite may comprise, other than the predetermined atoms, atoms, such as Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, Nb, and the like.

Generally, those containing elements, such as Co-Zn, Co-Ti, CO-Ti-Zr, Co-Ti-Zn, Ni-Ti-Zn, Nb-Zn-Co, Sb-Zn-Co, Nb-Zn, or the like, can be used. Specific impurities may be contained depending on the raw materials and manufacturing method.

The particle size is, as a diameter for hexagonal plate, usually 10 to 100 nm, preferably 10 to 60 nm, and more preferably 10 to 50 nm. Particularly, when reproduction is done by a MR head to increase track density, low noise is needed, so that the plate diameter is preferably 40 nm or less. If the plate diameter is less than 10 nm, stable magnetization cannot be desired due to thermal fluctuation. If the plate diameter is more than 100 nm, the noise is high. Neither case is suitable for high density magnetic recording.

The plate ratio (plate diameter/plate thickness) is desirably 1 to 15, preferably 1 to 7. If the plate ratio is small, the filling property in the magnetic layer becomes high, which is preferable, however, sufficient orientation cannot be obtained. If the plate ratio is more than 15, the noise becomes high due to stacking between particles. The specific surface area measured by the BET method in this particle size range is 10 to 100 m²/g. The specific surface area generally corresponds to an arithmetic value calculated from the particle plate diameter and plate thickness.

Narrower particle plate diameter and plate thickness distributions are usually preferable. Numeric values can be obtained for comparison by measuring 500 particles at random in a particle TEM photograph. Distribution is not normal distribution in many cases. Calculated standard deviation from the average size is σ/average size = 0.1 to 2.0. In order to make the particle size distribution sharp, the particle-producing reaction system is made as uniform as possible, and the produced particles are subjected to a distribution-improving treatment. For example, a method of selectively dissolving super fine particles in an acid solution, and the like are also known.

Coercivity Hc as measured in the magnetic material can usually be about 40 to 400 kA/m. Higher Hc is advantageous in high density recording, however, Hc is limited by the ability of the recording head. In the present invention, the magnetic material has an Hc of about 160 to 320 kA/m, preferably 176 to 280 kA/m. When the saturation magnetization of the head is more than 1.4 tesla, it is preferable to make Hc 176 kA/m or more. Hc can be controlled by the particle size (plate diameter and plate thickness), the type and amount of the elements contained, the substitution site of the elements, particle-producing reaction conditions, and the like.

Saturation magnetization σs is 40 to 80 A·m²/kg. Higher σs is preferable, however, σs tends to decrease as the particles become finer. For σs improvement, incorporation of spinel ferrite into magnetoplumbite ferrite, selection of the type and amount of the elements contained, and the like are well known. It is also possible to use a W type hexagonal ferrite. When the magnetic material is dispersed, the surface of the magnetic material particles is also treated with a substance compatible with a dispersion medium and polymer. As the surface treatment material, inorganic compounds and organic compounds are used. Typical examples of the main compound include oxides and hydroxides of Si, Al, P, and the like, various silane coupling agents, and various titanium coupling agents. The amount of the compound is 0.1 to 10% with respect to the magnetic material.

The pH of the magnetic material is also important for dispersion. Its optimum value is usually in the range of about 4 to 12 depending on the dispersion medium and polymer. The pH is selected in the range of about 6 to 11 for the chemical stability and storage stability of the medium. The moisture in the magnetic material also affects dispersion. Its optimum value depends on the dispersion medium and polymer and is usually selected in the range of about 0.01 to 2.0%.

Methods of manufacturing hexagonal ferrite include (1) a glass crystallization method, in which barium oxide, iron oxide and a metal oxide for displacing iron, and boron oxide or the like as a glass-forming substance are mixed to form the desired ferrite composition, and then the resulting composition are melted and quenched to form an amorphous material, which is then reheated, washed, and ground to obtain a barium ferrite crystal powder, (2) a hydrothermal reaction method, in which a barium ferrite composition metal salt solution is neutralized with an alkali, and, after by-products are removed, is solution phase heated at 100°C or more, washed, dried, and ground to obtain a barium ferrite crystal powder, (3) a coprecipitation method, in which a barium ferrite composition metal salt solution is neutralized with an alkali, and, after by-products are removed, is dried, treated at 1100°C or less, and ground to obtain a barium ferrite crystal powder, and the like. Any method can be used for the present invention.

As the binder used in the present invention, conventionally known thermoplastic resins, thermosetting resins, reactive resins, and mixtures thereof are used. The thermoplastic resin has a glass transition temperature (Tg) of -100 to 150°C, a number average molecular weight of 1,000 to 200,000, preferably 10,000 to 100,000, and a polymerization degree of about 50 to 1000.

Examples of such thermoplastic resin includes polymers and copolymers comprising, as the constituent unit, vinyl chloride, vinyl acetate, vinyl alcohol, maleic acid, acrylic acid, acrylate, vinylidene chloride, acrylonitrile, methacryl acid, methacrylate, styrene, butadiene, ethylene, vinyl butyral, vinyl acetal, vinyl ether, and the like, polyurethane resins, and various rubber resins.

Examples of thermosetting resins and reactive resins include phenolic resin, epoxy resin, polyurethane curable resin, urea resin, melamine resin, alkyd resin, acrylic reactive resin, formaldehyde resin, silicone resin, epoxy-polyamide resin, mixtures of polyester resin and isocyanate prepolymer, mixtures of polyester polyol and polyisocyanate, mixtures of polyurethane and polyisocyanate, and the like.

These resins are described in detail in "Plastic Handbook" published by Asakura Shoten. It is also possible to use known electron beam curable resins in each layer. Examples of these and manufacturing method thereof are described in detail in Japanese Patent Application Laid-open No. 62-256219.

The above resins can be used alone or in combination. Combinations of at least one of a vinyl chloride resin, a vinyl chloride-vinyl acetate copolymer, a vinyl chloride-vinyl acetate-vinyl alcohol copolymer, and a vinyl chloride-vinyl acetate-maleic anhydride copolymer, and polyurethane resin, and combinations of these and polyisocyanate are preferable.

For the structure of polyurethane resin, those known, such as polyester polyurethane, polyether polyurethane, polyether polyester polyurethane, polycarbonate polyurethane, polyester polycarbonate polyurethane, and polycaprolactone polyurethane can be used. For all the binders described here, it is preferable to use those, in which at least one polar group selected from -COOM, -SO₃M, -OSO₃M, -P=O(OM)₂, -O-P=O(OM)₂, OH, NR₂, N+R₃, an epoxy group, SH, CN, and the like, as required, wherein M indicates a hydrogen atom or alkali metal salt group, and wherein R indicates a hydrocarbon group, is introduced by copolymerization or addition reaction, to obtain a superior dispersion property and durability. The amount of such a polar group is 10⁻¹ to 10⁻⁸ mole/g, preferably 10⁻² to 10⁻⁶ mole/g.

Specific examples of these binders used in the present invention include VAGH, VYHH, VMCH, VAGF, VAGD, VROH, VYES, VYNC, VMCC, XYHL, XYSG, PKHH, PKHJ, PKHC, and PKFE manufactured by Union Carbide; MPR-TA, MPR-TA5, MPR-TAL, MPR-TSN, MPR-TMF, MPR-TS, MPR-TM, and MPR-TAO manufactured by Nissin Chemical Industry Co., Ltd.; 1000W, DX80, DX81, DX82, DX83, and 100FD manufactured by DENKI KAGAKU KOGYO KABUSHIKI KAISHA; MR-104, MR-105, MR110, MR100, MR555, and 400X-110A manufactured by ZEON Corporation; Nipporan N2301, N2302, and N2304 manufactured by NIPPON POLYURETHANE INDUSTRY CO., LTD.; PANDEX T-5105, T-R3080, T-5201, BURNOCK D-400, D-210-80, and CRISVON 6109 and 7209 manufactured by Dainippon Ink and Chemicals Incorporated; VYLON UR8200, UR8300, UR-8700, RV530, and RV280 manufactured by Toyobo Co., Ltd.; DAIFERAMINE 4020, 5020, 5100, 5300, 9020, 9022, and 7020 manufactured by Dainichiseika Color & Chemicals Mfg. Co., Ltd.; MX5004 manufactured by MITSUBISHI CHEMICAL CORPORATION; SANPRENE SP-150 manufactured by Sanyo Chemical Industries, Ltd.; Saran F310 and F210 manufactured by Asahi Kasei Corporation; and the like.

The binder used in the magnetic layer of the present invention is used in the range of 5 to 50 mass % with respect to ferromagnetic powder, preferably in the range of 10 to 30 mass %. Vinyl chloride resin is preferably used in the range of 5 to 30 mass %. Polyurethane resin is preferably used in the range of 2 to 20 mass %. Polyisocyanate is preferably used in the range 2 to 20 mass %. It is also possible to use only polyurethane or only polyurethane and isocyanate, for example, when head corrosion occurs due to slight dechlorination.

In the present invention, when polyurethane is used, it has a glass transition temperature (Tg) of -50 to 150°C, preferably 0°C to 100°C, and more preferably 30°C to 90°C, a breaking elongation of 100 to 2000%, a breaking stress of usually 0.05 to 10 kg/mm² (≅ 0.49 to 98 MPa), and a yield point of preferably 0.05 to 10 kg/mm² (≅ 0.49 to 98 MPa).

Examples of the polyisocyanate used in the present invention can include isocyanates, such as tolylenediisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenyl methane triisocyanate; products of these isocyanates and polyalcohols; and polyisocyanates produced by condensation of isocyanates; and the like.

Examples of commercial products of these isocyanates include CORONATE L, CORONATE HL, CORONATE 2030, CORONATE 2031, Millionate MR, and MILLIONATE MTL manufactured by NIPPON POLYURETHANE INDUSTRY CO., LTD.; Takenate D-102, Takenate D-110N, Takenate D-200, and Takenate D-202 manufactured by Takeda Pharmaceutical Company Limited; Desmodur L, Desmodur IL, Desmodur N, and Desmodur HL manufactured by Sumitomo Bayer Urethane Co., Ltd.; and the like. These can be used alone or in combination of two or more utilizing a difference in curing reactivity, for each layer.

Next, the carbon black used in the magnetic layer of the present invention is described. As the carbon black, furnace for rubber, thermal for rubber, black for color, acetylene black, and the like can be used. The carbon black has a specific surface area of 5 to 500 m²/g, a DBP oil absorption amount of 10 to 400 ml/100g, and a particle diameter of 5 nm to 300 nm, preferably 10 to 250 nm, and more preferably 20 to 200 nm. The carbon black preferably has a pH of 2 to 10, a moisture content of 0.1 to 10%, and a tap density of 0.1 to 1 g/ml.

Specific examples of the carbon black used in the present invention include BLACK PEARLS 2000, 1300,1000, 900, 905, 800, 700, and VULCAN XC-72 manufactured by Cabot Corporation; #80, #60, #55, #50, and #35 manufactured by Asahi Carbon Co., Ltd.; #2400B, #2300, #900, #1000, #30, #40, and #10B manufactured by MITSUBISHI CHEMICAL CORPORATION; CONDUCTEX SC, RAVEN 150, 50, 40, 15, and RAVEN-MT-P manufactured by Columbian Carbon; Ketjenblack EC manufactured by Nippon EC; and the like.

Carbon black may be surface treated with a dispersant and the like or grafted with resin, or a part of the surface may be made into graphite. Carbon black may also be dispersed previously with a binder before adding to a magnetic paint. These carbon blacks can be used alone or in combination. The carbon black is preferably used in an amount of 0.1 to 30% with respect to the magnetic material.

Carbon black serves to provide the antistatic property, to reduce the friction coefficient, to provide the light shielding property, to improve the membrane strength, and the like, for the magnetic layer, and these differ according to the carbon black used. Therefore, these carbon blacks used in the present invention can, of course, be used selectively according to the purpose, based on the properties as noted previously, such as particle size, oil absorption amount, conductivity, pH, and the like, and should be optimized. For the carbon black that can be used in the magnetic layer of the present invention, for example, "Carbon Black Manual" edited by Carbon Black Association can be referred to.

Next, the abrasive used in the present invention is described. As the abrasive, known materials mainly having a Mohs hardness of 6 or more, such as α-alumina with α ratio of 90% or more, β-alumina, silicon carbide, chromium oxide, cerium oxide, α-iron oxide, corundum, synthetic diamond, silicon nitride, silicon carbide, titanium carbide, titanium oxide, silicon dioxide, and boron nitride, are used alone or combination. A composite of these abrasives (an abrasive surface treated with another abrasive) may also be used.

These abrasives may comprise compounds or elements other than the main component, however, their effect is unchanged as long as the main component is 90% or more. These abrasives preferably have a particle size of 0.01 to 2 µm, more preferably 0.05 to 1.0 µm, and most preferably 0.05 to 0.5 µm. Particularly, in order to improve the electromagnetic conversion property, a narrower particle size distribution is preferable. In order to improve durability, it is also possible to combine abrasives each having a different particle size or to widen the particle diameter distribution of a single abrasive to obtain a similar effect, as required.

The abrasive preferably has a tap density of 0.3 to 2 g/ml, a moisture content of 0.1 to 5%, a pH of 2 to 11, and a specific surface area of 1 to 30 m²/g. The shape of the abrasive used in the present invention may be any of needle-shape, sphere, and dice-shape, however, abrasives with a shape partly having an edge are highly abrasive and preferable.

Specific examples of the abrasive include AKP-12, AKP-15, AKP-20, AKP-30, AKP-50, HIT20, HIT-30, HIT-55, HIT60, HIT70, HIT80, and HTT100 manufactured by Sumitomo Chemical Co., Ltd.; ERC-DBM, HP-DBM, and HPS-DBM manufactured by Reynolds; WA10000 manufactured by FUJIMI INCORPORATED; UB20 manufactured by Uyemura & Co., Ltd.; G-5, Chromex U2, and Chromex U 1 manufactured by Nippon Chemical Industrial Co., Ltd.; TF100 and TF140 manufactured by TODA KOGYO CORP.; Beta Random Ultrafine manufactured by IBIDEN CO., LTD.; B-3 manufactured by Showa Mining Co., Ltd.; and the like.

Next, the additives used in the magnetic layer of the present invention are described. As the additives, those providing a lubricating effect, antistatic effect, dispersion effect, plastic effect, and the like are used. Molybdenum disulfide, tungsten graphite disulfide, boron nitride, graphite fluoride, silicone oil, silicone having a polar group, fatty acid modified silicone, fluorine-containing silicone, fluorine-containing alcohol, fluorine-containing ester, polyolefin, polyglycol, alkyl phosphates and their alkali metal salts, alkyl sulfates and their alkali metal salts, polyphenyl ether, phenylphosphonic acid, α naphthylphosphoric acid, phenylphosphoric acid, diphenylphosphoric acid, p-ethylbenzenephosphonic acid, phenylphosphinic acid, aminoquinones, various silane coupling agents, titanium coupling agents, fluorine-containing alkyl sulfates and their alkali metal salts, monobasic fatty acids having 10 to 24 carbon atoms (may comprise an unsaturated bond and may also be branched) and their metal salts (such as Li, Na, K, and Cu), monohydric, dihydric, trihydric, tetrahydric, pentahydric, and hexahydric alcohols having 12 to 22 carbon atoms (may comprise an unsaturated bond and may also be branched), alkoxy alcohols having 12 to 22 carbon atoms, fatty acid monoesters, fatty acid diesters, and fatty acid triesters comprising monobasic fatty acids having 10 to 24 carbon atoms (may comprise an unsaturated bond and may also be branched) and any one of monohydric, dihydric, trihydric, tetrahydric, pentahydric, and hexahydric alcohols having 2 to 12 carbon atoms (may comprise an unsaturated bond and may also be branched), fatty acid esters of monoalkyl ethers of alkylene oxide polymers, fatty acid amides having 8 to 22 carbon atoms, aliphatic amines 8 to 22 carbon atoms, and the like can be used.

Specific examples of these fatty acids include capric acid, caprylic acid, lauric acid, myristic acid, palmitic acid, stearic acid, behenic acid, oleic acid, elaidic acid, linoleic acid, linolenic acid, isostearic acid, and the like.

Examples of the esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleyl. Examples of the alcohols include oleyl alcohol, stearyl alcohol, lauryl alcohol, and the like.

Nonionic surfactants, such as an alkylene oxide type, glycerin type, aglycidol type, and alkyl phenol ethylene oxide adduct; cationic surfactants, such as cyclic amines, ester amides, quaternary ammonium salts, hydantoin derivatives, heterocycles, phosphoniums and sulfoniums; anionic surfactants comprising acidic groups, such as a carboxylic acid, sulfonic acid, phosphoric acid, sulfate group, and phosphate group; amphoteric surfactants, such as amino acids, aminosulfonic acids, sulfates and phosphates of amino alcohols, and an alkyl betaine type; and the like can also be used.

These surfactants are described in detail in "Surfactant Manual" (published by Sangyo Tosho). These lubricants, antistatic agents, and the like need not be 100% pure and may comprise, other than the main component, impurities, such as isomer, unreacted substances, by-products, decomposed substances, and oxide. These impurities are preferably 30% or less, more preferably 10% or less.

These lubricants and surfactants used in the present invention individually have different physical actions and should be optimized for their type and amount and their ratio for providing synergic effects, according to the purpose. Using fatty acid in the magnetic layer to control exudation to the surface, using esters to control exudation to the surface, adjusting the amount of the surfactant to improve the stability of coating, adjusting the amount of the lubricant added to improve the lubricating effect, and the like are considered. However, these examples are not limiting. Generally, the total amount of the lubricant is selected in the range of 0.1% to 50% with respect to the magnetic material powder, preferably in the range of 2% to 25%.

All or part of the additives used in the present invention may be added in any step in the magnetic paint manufacturing process. For example, the additives may be mixed with the magnetic material before the kneading step, may be added during the step of kneading with the magnetic material, binder, and solvent, may be added during the dispersion step, may be added after dispersion, or may be added immediately before coating. Depending on the purpose, a lubricant can also be applied to a surface of the magnetic layer after calendering or slitting. As the organic solvent used in the present invention, those known can be used, for example, solvents described in Japanese Patent Application Laid-open No. 6-68453 can be used.

Next, the layer structure (the thickness of each layer) of the magnetic recording medium of the present invention is described. The thickness of the substrate can be 2 to 100 µm, preferably 2 to 80 µm. The thickness of the substrate for computer tapes can be in the range of 3.0 to 6.5 µm (preferably 3.0 to 6.0 µm, more preferably 4.0 to 5.5 µm).

A primer layer for improving adhesiveness may be provided between the smooth layer and the magnetic layer. This primer layer has a thickness of 0.01 to 0.5 µm, preferably 0.02 to 0.5 µm. In the present invention, it is preferable that a back layer is provided opposite the magnetic layer side to provide effects, such as antistatic effect and curl correction. The back layer has a thickness of 0.1 to 4 µm, preferably 0.3 to 2.0 µm. As these primer layer and back layer, those known can be used.

The thickness of the magnetic layer of the medium of the present invention is optimized according to the saturation magnetization amount and head gap length of the head used, and recording signal band. The magnetic layer may be separated into two or more layers each having a different magnetic property, and known structures for multi-layer magnetic layers can be applied.

Generally, magnetic tapes for computer data recording require a higher repeated running property than video tapes and audio tapes. In order to maintain such high running durability, it is preferable that the back layer contains carbon black and an inorganic powder.

It is preferable to combine two types of carbon black each having a different average particle size. In this case, it is preferable to combine a fine particle carbon black having an average particle size of 10 to 20 nm and a large particle carbon black having an average particle size of 230 to 300 nm.

Generally, by adding the fine particle carbon black as described above, the surface electric resistance of the back layer can be set low, and the light transmittance can also be set low. Since many magnetic recording apparatuses utilize the light transmittance of the tape for operation signals, the addition of the fine particle carbon black is effective particularly in such a case.

In addition, the fine particle carbon black is generally excellent for holding solution lubricants and contributes to reduction of the friction coefficient when combined with the lubricant. On the other hand, the large particle carbon black having a particle size of 230 to 300 nm functions as a solid lubricant, and forms tiny projections on the surface of the back layer to reduce contact area, thus, contributing to reduction of the friction coefficient.

Specific commercial products of the fine particle carbon black can include RAVEN 2000B (18 nm), and RAVEN 1500B (17 nm) (manufactured by Columbian Carbon); BP800 (17 nm) (manufactured by Cabot Corporation); PRINNTEX90 (14 nm), PRINTEX95 (15 nm), PRINTEX85 (16 nm), and PRINTEX75 (17 nm) (manufactured by Degussa); and #3950 (16 nm)(manufactured by MITSUBISHI CHEMICAL CORPORATION).

Specific examples of commercial products of the large particle carbon black can include Thermal Black (270 nm) (manufactured by Cahncalb) and RAVEN MTP (275 nm) (manufactured by Columbian Carbon).

When two types of carbon black each having a different average particle size are used in the back layer, the content ratio (mass ratio) of a fine particle carbon black of 10 to 20 nm to a large particle carbon black of 230 to 300 nm is preferably in the range of 98:2 to 75:25, more preferably in the range of 95:5 to 85:15.

The content of the carbon black (its total amount when two types are used) in the back layer is usually in the range of 30 to 80 parts by mass, preferably in the range of 45 to 65 parts by mass, with respect to 100 parts by mass of the binder.

It is preferable to combine two types of inorganic powder each having different hardness. Specifically, it is preferable to use a soft inorganic powder having a Mohs hardness of 3 to 4.5 and a hard inorganic powder having a Mohs hardness of 5 to 9. By adding the soft inorganic powder having a Mohs hardness of 3 to 4.5, stabilization of the friction coefficient for repeated running can be intended. In addition, with the hardness in this range, the sliding guide pole is not scraped. It is also preferable that this inorganic powder has an average particle size of 30 to 50 nm.

Examples of the soft inorganic powder having a Mohs hardness of 3 to 4.5 can include, for example, calcium sulfate, calcium carbonate, calcium silicate, barium sulfate, magnesium carbonate, zinc carbonate, and zinc oxide. These can be used alone, or two or more types of these can be combined.

The content of the soft inorganic powder in the back layer is preferably in the range of 10 to 140 parts by mass, more preferably 35 to 100 parts by mass, with respect to 100 parts by mass of carbon black.

By adding the hard inorganic powder having a Mohs hardness of 5 to 9, the strength of the back layer increases, so that running durability improves. When these inorganic powders are used with the carbon black and soft inorganic powder, repeated sliding hardly deteriorates, thus, providing a strong back layer. In addition, addition of this inorganic powder provides a moderate abrasive force, thus, reducing the attachment of shavings to the tape guide pole and the like. Particularly, when combined with the soft inorganic powder, the sliding property with respect to the guide pole having a rough surface improves, so that stabilization of the friction coefficient of the back layer can also be intended.

It is preferable that the hard inorganic powder has an average particle size of 80 to 250 nm (more preferably, 100 to 210 nm).

Examples of the hard inorganic powder having a Mohs hardness of 5 to 9 can include, for example, α-iron oxide, α-alumina, and chromium oxide (Cr₂O₃). These powders can be used alone or combined. Among these, α-iron oxide and α-alumina are preferable. The content of the hard inorganic powder in the back layer is usually 3 to 30 parts by mass, preferably 3 to 20 parts by mass.

When the above soft inorganic powder and hard inorganic powder are combined in the back layer, it is preferable to select the soft inorganic powder and hard inorganic powder so that the difference in hardness between the soft inorganic powder and the hard inorganic powder is 2 or more (more preferably 2.5 or more, particularly 3 or more).

It is preferable that the back layer contains the above two types of inorganic powder each having a specific average particle size and a different Mohs hardness and the above different two types of carbon black each having a different average particle size.

The back layer can contain a lubricant. The lubricant can be properly selected from the lubricants that can be used for the magnetic layer as mentioned. In the back layer, the lubricant is usually added in the range of 1 to 5 parts by mass with respect to 100 parts by mass of the binder.

Next, the method for manufacturing the magnetic recording medium of the present invention is described. The steps of manufacturing a magnetic paint comprise at least a kneading step, a dispersion step, and a mixing step provided before or after these steps as required. Each step may be divided into two or more stages. All raw materials used in the present invention, such as a magnetic material, binder, carbon black, abrasive, antistatic agent, lubricant, and solvent, may be added initially in or in the middle of any step. In addition, each raw material may be divided and added in two or more steps. For example, polyurethane may be divided and introduced in the kneading step, the dispersion step, and the mixing step for viscosity adjustment after dispersion.

In order to achieve the object of the present invention, conventional known manufacturing technology can be used as a part of steps. In the kneading step, it is preferable to use apparatuses having a strong kneading force, such as an open kneader, continuous kneader, pressure kneader, and extruder. When the kneader is used, all or part of the binder (preferably 30% or more of the whole binder) is kneaded with the magnetic material and in the range of 15 to 500 parts with respect to 100 parts of the magnetic material. Details of these kneading processes are described in Japanese Patent Application Laid-open No. 1-106338 and Japanese Patent Application Laid-open No. 1-79274. In order to disperse the magnetic layer solution, glass beads can be used, however, zirconia beads, titania beads, and steel beads, which are high specific gravity dispersion medium, are suitable. The particle diameter and filling ratio of these dispersion mediums are optimized. As the dispersion apparatus, those known can be used.

When the magnetic recording medium is employed in the form of disc, a sufficient isotropic orientation may be obtained even with no orientation without using any orientation apparatus, however, it is preferable to use known random orientation apparatuses, such as to locate cobalt magnets slantwise and alternately, and to apply an alternating current magnetic field by a solenoid. As to the isotropic orientation, for the ferromagnetic metal powder, generally, an in-plane two-dimensional random orientation is preferable, however, a three-dimensional random orientation with the vertical component is also possible. For the hexagonal ferrite, generally, in-plane and vertical three-dimensional random orientations are likely to be obtained, however, an in-plane two-dimensional random orientation is also possible. In addition, a circumferentially isotropic magnetic property can also be provided by using known methods, such as opposed opposite pole magnets, to provide vertical orientation. Particularly, when performing high density recording, the vertical orientation is preferable. In addition, circumferential orientation may be provided by using spin coating.

When the magnetic recording medium is employed in the form of tape, longitudinal orientation is obtained by using cobalt magnets and a solenoid. It is preferable that the drying position of the coating can be controlled by controlling the temperature and flow of drying air, and coating speed. The coating speed is preferably 20 m/min to 1000 m/min. The temperature of drying air is preferably 60°C or more. It is also possible to perform moderate previous drying before entering the magnet zone.

It is preferable to process with heat-resistant plastic rolls of epoxy, polyimide, polyamide, polyimide amide, or the like, or metal rolls, as calendering rolls. The process temperature is preferably 50°C or more, more preferably 100°C or more. The linear pressure is preferably 200 kg/cm (≅ 196 kN/m) or more, more preferably 300 kg/cm (≅ 294 kN/m) or more.

The magnetic layer of the magnetic recording medium of the present invention has a saturation flux density of 0.2 to 0.5 T, when a ferromagnetic metal fine powder is used, and has a saturation flux density of 0.1 to 0.3 T, when hexagonal ferrite is used. Coercivity Hc is usually 120 to 400 kA/m, preferably 136 to 240 kA/m. A narrower coercivity distribution is preferable. SFD (switching field distribution) and SFDr are preferably 0.6 or less.

When the magnetic recording medium is employed in the form of disc, the squareness ratio is usually 0.55 to 0.67, preferably 0.58 to 0.64, for the two-dimensional random orientation. For the three-dimensional random orientation, the squareness ratio is preferably 0.45 to 0.55. For the vertical orientation, the squareness ratio is usually 0.6 or more, preferably 0.7 or more, in the vertical direction, and the squareness ratio is usually 0.7 or more, preferably 0.8 or more, when opposite magnetic field correction is made. For both the two-dimensional and three-dimensional random orientations, the orientation degree ratio is preferably 0.8 or more. For the two-dimensional random orientation, the squareness ratio, Br, and Hc in the vertical direction are preferably within 0.1 to 0.5 times those in the in-plane direction. When the magnetic recording medium is employed in the form of tape, the squareness ratio is 0.7 or more, preferably 0.8 or more.

The friction coefficient of the magnetic recording medium of the present invention to the head is usually 0.5 or less, preferably 0.3 or less, at a temperature of -10 to 40°C and a humidity of 0 to 95%. The surface resistivity is preferably 10⁴ to 10¹² ohm/sq at the magnetic surface. The charge potential is preferably -500V to +500V.

The elastic modulus of the magnetic layer at 0.5% elongation is preferably 100 to 2000 kg/mm² (≅ 980 to 19600 N/mm²) in each in-plane direction. The break strength is preferably 10 to 70 kg/mm² (≅ 98 to 686 N/mm²). The elastic modulus of the magnetic recording medium is preferably 100 to 1500 kg/mm² (≅ 980 to 14700 N/mm²) in each in-plane direction. The residual elongation is preferably 0.5% or less. The thermal shrinkage rate at temperatures of 100°C or less is preferably 1% or less, more preferably 0.5% or less, and most preferably 0.1% or less.

The glass transition temperature of the magnetic layer (the maximum loss modulus of dynamic viscoelasticity measurement measured at 110 Hz) is preferably 50°C to 120°C. The loss modulus is preferably in the range of 1 × 10³ to 8 × 10⁴ N/cm². The loss tangent is preferably 0.2 or less. If the loss tangent is too high, adhesion failure occurs easily.

It is preferable that each of these thermal and mechanical properties is substantially equal with a difference of 10% or less in the in-plane directions of the medium. The residual solvent in the magnetic layer is preferably 100 mg/m² or less, more preferably 10 mg/m² or less. The void ratio of the coating layers, both the lower and upper layers, is preferably 30 volume % or less, more preferably 20 volume % or less. Lower void ratio is preferable to provide high output, however, depending on the purpose, a certain value should be obtained. For example, for disc mediums where repeated use is regarded as important, higher void ratio often provides preferable running durability.

The magnetic layer preferably has an arithmetic average roughness Ra of 4.0 nm or less, more preferably 3.8 nm or less, and most preferably 3.5 nm or less, as measured for an area of about 250 µm × 250 µm by using TOPO-3D manufactured by WYCO. The magnetic layer preferably has a maximum height Rmax of 0.5 µm or less, a ten point average roughness Rz of 0.3 µm or less, a center plane peak height Rp of 0.3 µm or less, a center plane valley depth Rv of 0.3 µm or less, a center plane area ratio Sr of 20% to 80%, an average wavelength λa of 5 µm to 300 µm.

In the magnetic layer, surface projections having a size of 0.01 to 1 µm can be set optionally in the range of 0 to 2000, thereby, preferably optimizing the electromagnetic conversion property and friction coefficient. These can be easily controlled by the control of the surface property by the filler for the substrate, the particle diameter and amount of the powder added to the magnetic layer, the surface topography of the calendering rolls, and the like. Specifically, it is preferable that the density of projections having a height of 20 nm or more on the surface of the magnetic layer, as measured by an atomic force microscope, is 40/900 µm² or less. It is preferable that the curl is within ±1 mm.

While embodiments of the magnetic recording medium and method for manufacturing the magnetic recording medium according to the present invention are described above, the present invention is not limited to the above embodiments and can be employed in various manners.

For example, while a bilayer structure, in which the smooth layer and magnetic layer are provided on the surface side of the substrate, is employed in this embodiment, a structure, in which a non-magnetic middle layer is provided between the smooth layer and the magnetic layer, can also be employed.

### [Examples]

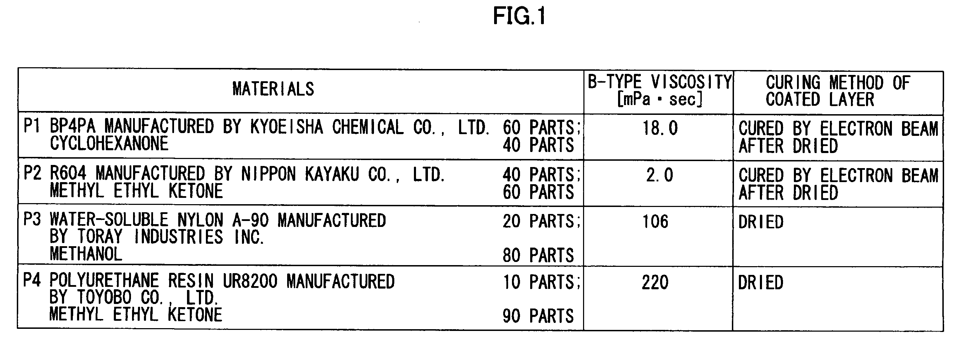

Examples of the present invention are described, compared with Comparative Examples. In the following examples, the indication "part" means "parts by weight." In the following examples, smooth layer processes P1 to P4 are shown in the table of Fig. 1. In this table, the composition of coating solutions is indicated in the column "Materials," the viscosity of the coating solutions measured by a Brookfield type viscometer is indicated in the column "B-Type Viscosity," and methods of curing (drying) the coating solution are indicated in the column "Coating Curing Method."

In the following examples, the composition of barium ferrite magnetic paint (1) used for the magnetic layer of flexible discs as Example 1, and the composition of ferromagnetic metal magnetic paint (2) used for the magnetic layer of magnetic tapes as Example 2 are prepared as follows.

### (1) Composition of magnetic paint 1

| | |
|---|---|
| barium ferrite magnetic powder | 100 parts |
| composition: Ba/Zn/Co/Nb = 1/0.7/0.1/0.3 (molar ratio) | |
| vinyl chloride copolymer MR555 (manufactured by ZEON Corporation) | 5 parts |
| polyurethane resin UR8200 (manufactured by Toyobo Co., Ltd.) | 3 parts |
| α-alumina HIT55 (manufactured by Sumitomo Chemical Co., Ltd.) | 10 parts |
| carbon black #55 (manufactured by Asahi Carbon Co., Ltd.) | 1 part |
| phenyl sulfonic acid | 2 parts |
| butyl stearate | 10 parts |
| butoxyethyl stearate | 5 parts |
| isohexadecyl stearate | 3 parts |
| stearic acid | 2 parts |
| methyl ethyl ketone | 125 parts |
| cyclohexanone | 125 parts |

### (2) Composition of magnetic paint 2

| | |
|---|---|
| ferromagnetic metal powder | 100 parts |
| composition: Co/Fe = 21 atom %, Al/Fe = 7 atom %, Y/Fe= 5 atom % | |
| average long axis length: 0.06 µm | |
| average needle ratio: 6 | |
| Hc: 2310 Oe (185 kA/m) | |
| σs: 137 A·m²/kg | |
| vinyl chloride copolymer MR110 (manufactured by ZEON Corporation) | 12 parts |
| polyurethane resin UR8200 (manufactured by Toyobo Co., Ltd.) | 3 parts |
| α-alumina HIT55 (manufactured by Sumitomo Chemical Co., Ltd.) | 2 parts |
| carbon black #55 (manufactured by Asahi Carbon Co., Ltd.) | 1 part |
| butyl stearate | 1 part |
| stearic acid | 5 parts |
| methyl ethyl ketone | 100 parts |
| cyclohexanone | 20 parts |
| toluene | 60 parts |

For each of the above paints, the components were kneaded by a kneader and then subjected to a dispersion process for 4 hours using a sand mill. To the resulting dispersion, 3 parts of polyisocyanate were added, and 40 parts of cyclohexanone were further added. The mixture was filtered using a filter having an average pore diameter of 1 µm to prepare a coating solution for forming a magnetic layer.

The resulting magnetic layer coating solution was applied on an aramid substrate (trade name: Mictron) having a thickness of 4.4 µm and an arithmetic average roughness of 7.0 nm so as to provide a predetermined thickness after drying, and the coating layer was oriented by a cobalt magnet having a magnetic force of 0.6T and a solenoid having a magnetic force of 0.6 T while being still wet. After drying, it was calendered by a 7-stage calender comprising only metal rolls at a temperature of 85°C and at a speed of 200 m/min.

For the magnetic tapes as Example 2, after forming a magnetic layer, a back layer was formed on the back surface. The composition of back layer coating solution (3) was prepared as follows.

### (3) Composition of back layer coating solution

| | |
|---|---|
| carbon black | 100 parts |
| average particle size: 20 nm | |
| DBP oil absorption amount: 200 ml/100 g | |
| alumina | 1 part |
| average particle size: 200 nm | |
| nitrocellulose RS1/2 (manufactured by DAICEL CHEMICAL INDUSTRIES, LTD.) | |
| | 50 parts |
| urethane resin N-2301 (manufactured by NIPPON POLYURETHANE INDUSTRY CO., LTD.) | 45 parts (solids) |
| methyl ethyl ketone/cyclohexanone | 1000 parts |

The above coating solution was mixed and then subjected to a dispersion process for 3 hours using a sand mill. To the resulting dispersion, 5 parts of polyisocyanate (manufactured by NIPPON POLYURETHANE INDUSTRY CO., LTD., product name: CORONATE 3041) (solids) and 500 parts of methyl ethyl ketone/toluene were added. The mixture was stirred and mixed for 20 minutes to prepare a coating solution for a back layer.

The resulting coating solution was applied on the back surface of a substrate so as to provide a predetermined thickness after drying.

The performance of each of the flexible discs as Example 1 and magnetic tapes as Example 2 prepared as described above was evaluated by the following measurements.
(1) SN ratio (disc)
   A MIG head (gap: 0.15 µm, 1.8 T) as a recording head and a MR head as a reproducing head were mounted on a spin stand for measurement. DC noise as noise was measured at a revolution of 2500 to 3500 rpm with a radius of 30 mm. The surface recording density was 1 gigabit/(25.4 mm)² (track pitch: 1 µm, bit length: 0.03 µm).
(2) CN ratio (tape)
   A MIG head (gap: 0.15 µm, 1.8 T) as a recording head and a MR head as a reproducing head were mounted on a drum tester for measurement. Modulation noise as noise was measured at a head-medium relative speed of 1 to 3 m/min. Surface recording density was 0.57 gigabit/(25.4 mm)² (track pitch: 6.8 µm, bit length: 0.165 µm).
(3) For the density of the surface projections (20 nm or more) in the smooth layer, projections in a square area of 30 µm per side (900 µm²) were measured using NanoScope 3 (AFM: atomic force microscope) manufactured by Digital Instruments, using a pyramidal SiN probe having an apex angle of 70°.
(4) Cupping measurement (tape)
   The tape was cut into a length of 10 mm. The cut tape was placed on a flat glass plate and was measured for maximum lift amount H using a laser displacement meter. A H of more than 1 mm was determined as "large," a H of 0.2 to 1 mm as "small," and a H of less than 0.2 mm as "none."
(5) Surface roughness Ra
   As described previously, the surface roughness of each layer was indicated by arithmetic average roughness Ra as obtained by measuring a square area of 250 µm per side by TOPO-3D manufactured by WYKO.

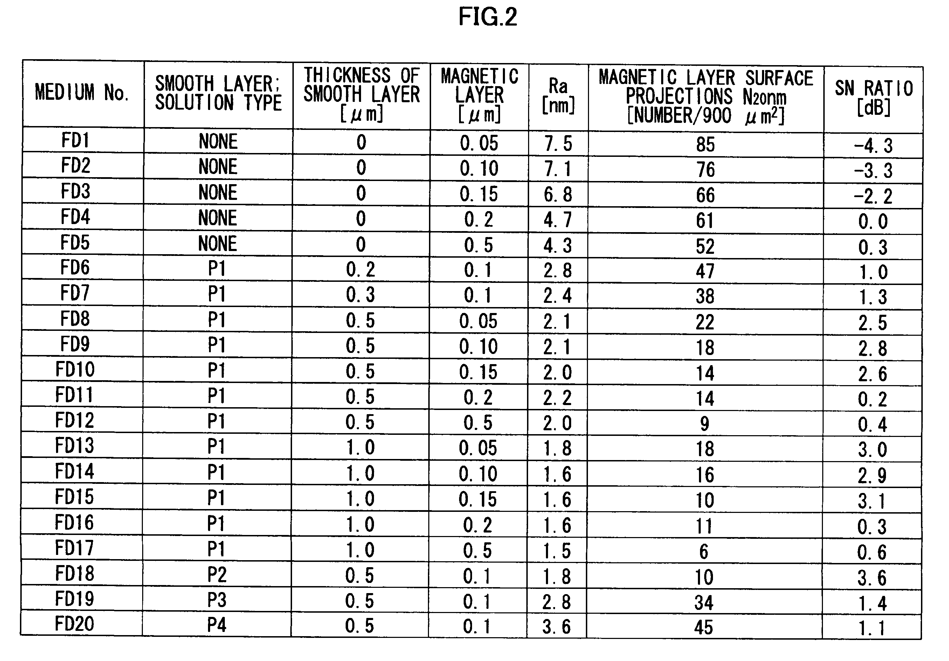

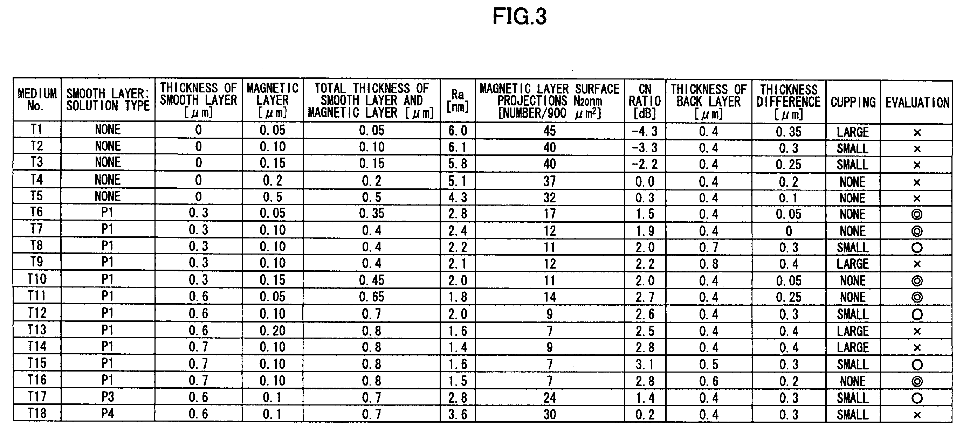

The manufacturing conditions and evaluation results of the flexible discs as Example 1 are shown in the table of Fig. 2. The manufacturing conditions and evaluation results of the magnetic tapes as Example 2 are shown in the table of Fig. 3.

In Example 1 in Fig. 2, FD 1 to FD5 were Comparative Examples without a smooth layer. The thickness of the magnetic layers of these was in the range of 0.05 to 0.5 µm.

In FD6 to FD 17, a smooth layer was formed under the conditions of P 1 in Fig. 1. The thickness of the smooth layers of these was in the range of 0.2 to 1.0 µm, and the thickness of the magnetic layers was in the range of 0.05 to 0.5 µm. Among these, FD11, FD12, FD16, and FD17 were Comparative Examples in which the thickness of the magnetic layer was more than 0.15 µm.

In FD 18, a smooth layer was formed under the conditions of P2 in Fig. 1. The thickness of the smooth layer was 0.5 µm, and the thickness of the magnetic layer was 0.1 µm.

In FD 19, a smooth layer was formed under the conditions of P3 in Fig. 1. The thickness of the smooth layer was 0.5 µm, and the thickness of the magnetic layer was 0.1 µm.

In FD20, a smooth layer was formed under the conditions of P4 in Fig. 1. The thickness of the smooth layer was 0.5 µm, and the thickness of the magnetic layer was 0.1 µm.

For Comparative Examples (FD1 to FD5) without a smooth layer, surface roughness Ra was large (4.3 to 7.5 nm). The density of the surface projections (20 nm or more) in the smooth layer was high, and even the lowest (FD5) was 52, which was more than 40. In addition, the SN ratio was poor (-4.3 to 0.3 dB).

For Comparative Examples (FD11, FD12, FD16, and FD17) in which the thickness of the magnetic layer was more than 0.15 µm, surface roughness Ra was comparable to that of other examples (1.5 to 2.2 nm), and the density of the surface projections (20 nm or more) in the smooth layer was also comparable to that of other examples (6 to 14). However, the SN ratio was inferior to that of other examples (0.2 to 0.6 dB).

For Examples other than the above Comparative Examples, surface roughness Ra was relatively small (1.6 to 3.6 nm), the density of the surface projections (20 nm or more) in the smooth layer was low in many cases (9 to 47), and the SN ratio was also superior to that of Comparative Examples (1.0 to 3.6 dB).

In Example 2 in Fig. 3, T1 to T5 were Comparative Examples without a smooth layer. The thickness of the magnetic layers of these was in the range of 0.05 to 0.5 µm. The thickness of the back layer was 0.4 µm. The difference in thickness between the magnetic layer and the back layer was in the range of 0.1 to 0.35.

In T6 to T16, a smooth layer was formed under the conditions of P 1 in Fig. 1. The thickness of the smooth layers of these was in the range of 0.3 to 0.7 µm, and the thickness of the magnetic layers was in the range of 0.05 to 0.20 µm. Among these, T13 was Comparative Example in which the thickness of the magnetic layer was more than 0.15 µm. The total thickness of the smooth layer and the magnetic layer of these was in the range of 0.35 to 0.8 µm. The thickness of the back layer was in the range of 0.4 to 0.8 µm. The difference between the total thickness of the smooth layer and the magnetic layer and the thickness of the back layer was in the range of 0 to 0.4 µm. Among these, the difference between the total thickness of the smooth layer and the magnetic layer and the thickness of the back layer of T9, T13, and T14 was 0.4 µm, which was more than 0.3 µm.

In T17, a smooth layer was formed under the conditions of P3 in Fig. 1. The thickness of the smooth layer was 0.6 µm, and the thickness of the magnetic layer was 0.1 µm. Therefore, the total thickness of the smooth layer and the magnetic layer was 0.7 µm. The thickness of the back layer was 0.4 µm. Therefore, the difference between the total thickness of the smooth layer and the magnetic layer and the thickness of the back layer was 0.3 µm.

In T18, a smooth layer was formed under the conditions of P4 in Fig. 1. The thickness of the smooth layer was 0.6 µm, and the thickness of the magnetic layer was 0.1 µm. Therefore, the total thickness of the smooth layer and the magnetic layer was 0.7 µm. The thickness of the back layer was 0.4 µm. Therefore, the difference between the total thickness of the smooth layer and the magnetic layer and the thickness of the back layer was 0.3 µm.

For Comparative Examples (T1 to T5) without a smooth layer, surface roughness Ra was large (4.3 to 6.1 nm), and the density of the surface projections (20 nm or more) in the smooth layer was relatively high (32 to 45). In addition, the CN ratio was poor (-4.3 to 0.3 dB). The cupping was "none" in some cases (T4 and T5), however, the total evaluation was poor in every case.

For Comparative Example (T13) in which the thickness of the magnetic layer was more than 0.15 µm, surface roughness Ra was comparable to that of other examples (1.6 nm), the density of the surface projections (20 nm or more) in the smooth layer was also comparable to that of other examples (7), and the CN ratio was also comparable to that of other examples (2.5 dB). However, the cupping was "large," and the total evaluation was poor, possibly due to the fact that the difference between the total thickness of the smooth layer and the magnetic layer and the thickness of the back layer was 0.4 µm (more than 0.3 µm).

For T9 and T14 in which the difference between the total thickness of the smooth layer and the magnetic layer and the thickness of the back layer was 0.4 µm (more than 0.3 µm), surface roughness Ra was comparable to that of other examples (2.1 and 1.4 nm), the density of the surface projections (20 nm or more) in the smooth layer was also comparable to that of other examples (12 and 9), and the CN ratio was also comparable to that of other examples (2.2 and 2.8 dB). However, the cupping was "large," and the total evaluation was poor, possibly due to the large difference in layer thickness.

For T18, the cupping was "small," however, surface roughness Ra was relatively large (3.6 nm), the density of the surface projections (20 nm or more) in the smooth layer was also relatively high (30), the CN ratio was also poor (0.2 dB), and the total evaluation was poor.

For examples other than the above examples, surface roughness Ra was relatively small (1.5 to 2.8 nm), the density of the surface projections (20 nm or more) in the smooth layer was low in many cases (7 to 24), the CN ratio was also superior to that of the above examples (1.4 to 3.1 dB), the cupping was also "small" or "none," and the total evaluation was good or excellent.

## Claims

1. A magnetic recording medium comprising:
a substrate;
a first coating layer formed on a surface of the substrate; and
a second coating layer comprising a magnetic material formed on the first coating layer,
**characterized in that** a surface roughness Ra of the first coating layer is smaller than a surface roughness Ra of the substrate, and the second coating layer has a thickness of 150 nm or less.

2. The magnetic recording medium according to claim 1, further comprising: a back layer formed on a back surface of the substrate, wherein a difference between the total thickness of the first coating layer and the second coating layer and the thickness of the back layer is 0.3 µm or less.

3. The magnetic recording medium according to claim 1 or 2, wherein the second coating layer has a surface roughness Ra of 4 nm or less, and a density of projections having a height of 20 nm or more on the surface of the second coating layer, as measured by atomic force microscopy, is 40 projections/900 µm² or less.

4. The magnetic recording medium according to any one of claims 1 to 3, wherein the first coating layer contains a radiation curable resin.

5. A method for manufacturing a magnetic recording medium comprising a magnetic layer formed on a surface of a substrate, comprising the steps of:
applying a first coating solution on a surface of a continuously running substrate to form a first coating layer so that a surface roughness Ra of the first coating layer is smaller than a surface roughness Ra of the substrate; and
applying a second coating solution comprising a magnetic material on the first coating layer to form a second coating layer.

6. The method for manufacturing a magnetic recording medium according to claim 5, wherein a viscosity of the first coating solution as measured by a Brookfield type viscometer is 100 Pa·s or less.

7. The method for manufacturing a magnetic recording medium according to claim 5 or 6, wherein the first coating solution contains a radiation curable resin, and the first coating solution is exposed to radiation to form a cured coating, before the second coating solution is applied.
